# EUROPEAN PATENT SPECIFICATION

(11) **EP 1 037 001 B1**
(45) Date of publication and mention of the grant of the patent: **15.09.2004**
(21) Application number: 00200682.3
(22) Date of filing: 28.02.2000
(51) Int. Cl.: F25B 31/00, F04B 39/06

(54) **Apparatus for cooling the power electronis of a refrigeration compressor drive**
Gerät zum Kühlen der Leistungselektronik eines Kälteverdichterantriebs
Dispositif pour refroidir l'electronique de puissance d'un entraînement de compresseur frigorifique

(30) Priority: 15.03.1999 US 268573
(43) Date of publication of application: 20.09.2000
(73) Proprietor: CARRIER CORPORATION, Syracuse New York 13221 (US)
(72) Inventor: Stark, Michael A., Syracuse, New York 13210 (US)
(74) Representative: Leckey, David Herbert

(56) References cited:
- EP-A- 0 196 863
- DE-C- 4 338 939
- US-A- 3 261 172
- US-A- 5 475 985
- US-A- 5 694 780

## Description

This invention relates to method and apparatus for cooling of the electronics of a variable frequency drive associated with a refrigerant compressor.

Compressors used in many refrigeration systems generally require close control over the compressor motor speed in order to maintain the system within desired limits under varying load conditions. The compressors are therefore equipped with variable frequency drives (VFD) that contain power electronic components in the form of insulated gate bipolar transistors that can overheat and thereafter require cooling. The generally accepted procedure to provide cooling to the power electronics is to mount the transistors upon a heat sink and carry the heat away from the sink by circulating coolant in or around the heat sink. The capability of the heat sink and cooling system are of primary consideration in determining the power capacity of the VFD.

The heat sink is usually in the form of a relatively large block of material having good heat transfer and thermal inertia characteristics. A flow passage is formed in the block and coolant is circulated through the passage which absorbs excess heat and carries it out of the system.

The use of water to cool the VFD heat sink has proven to be a satisfactory means of cooling the VFD transistors, however, water cooling is difficult to control and the heat sink temperature sometimes can move out of desired operating range. This, in turn, can produce overheating of the VFD electronics and adversely effect the operation of the refrigeration system. In addition, the water cooling circuit requires additional water handling components such as pumps, heat exchangers and the like needed to discharge heat from the transistors into the surrounding ambient. This type of cooling equipment is generally complex, costly and requires a good deal of space to install.

US-A-5,694,780 discloses a refrigeration system having a compressor body thermally coupled to a cooling jacket.

It is therefore a primary object of the present invention to improve refrigeration systems.

According to the present invention, there is provided cooling apparatus as claimed in claim 1 and a method of cooling power electronic components as claimed in claim 11.

A preferred apparatus of the invention includes a condenser, an evaporator, and a compressor connected in series by refrigerant lines and an expansion means in one of the refrigerant lines for throttling refrigerant moving between the condenser and the evaporator from a high pressure to a lower pressure. A variable frequency drive is associated with the compressor that contains heat producing power electronic components in the form of insulated gate bipolar transistors that require cooling. The power electronic components are mounted in heat transfer relation with a block of material having good heat transfer characteristics. The block acts as a heat sink to draw heat away from the power electronic components. A flow circuit is arranged to pass refrigerant from the system condenser to the inlet of the system compressor through the heat sink. An expansion valve is mounted in the flow circuit which controls the expansion of refrigerant moving through the circuit, thus providing cooling to the heat sink and the electronic components thereon.

For a better understanding of these and other objects of the invention, reference will be made to the following detailed description of the invention which is to be read in association with the accompanying drawing, wherein:
Fig. 1 is a schematic representation of a refrigeration system incorporating the present invention;
Fig. 2 is a schematic representation similar to Fig. 1 relating to a further embodiment of the invention;
Fig. 3 is also a schematic representation relating to a still further embodiment of the invention;
Fig. 4 is a schematic representation of yet another embodiment of the invention; and
Fig. 5 is an enlarged side elevation of a temperature expansion control valve suitable for use in the practice of the present invention.

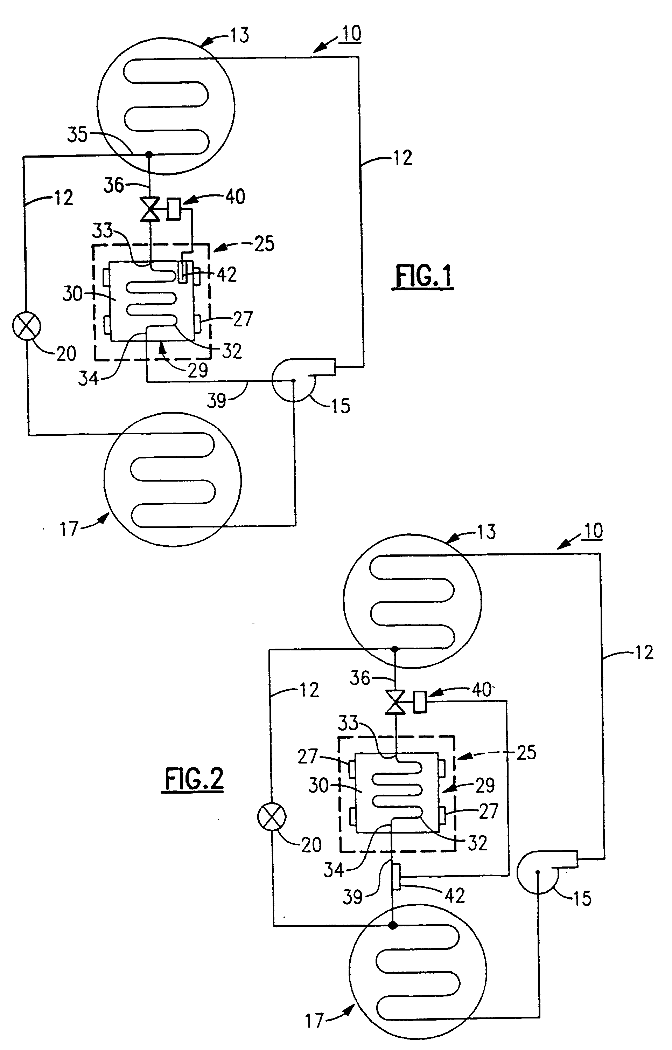

Turning initially to Fig. 1, there is illustrated schematically a refrigeration system, generally referenced 10, that utilizes the Carnot refrigeration cycle that includes a series of refrigerant lines 12 that operatively connects the various system components. The system further includes a condenser 13 that is connected to the outlet side of a compressor 15 by means of a refrigerant line 12. The condenser is, in turn, connected in series with an evaporator 17, the outlet of which is connected via a refrigerant line to the inlet side of the compressor to complete the system loop. An expansion device 20 is mounted in the refrigeration line between the condenser and the evaporator which expands high pressure refrigerant leaving the condenser to a lower temperature and pressure. The expansion device can be any one of many such devices, such as a throttling valve or capillary tube of the types that are well known and used in the art.

A substance to be chilled is circulated through the evaporator in heat transfer relationship with the low temperature refrigerant. The refrigerant, as it absorbs heat in the chilling process is evaporated at a relatively low pressure and the refrigerant vapor is then delivered to the compressor inlet for recirculation through the system.

The compressor motor is equipped with a variable frequency drive (VFD) 25 that controls the motor speed. The drive is shown in phantom outline in Fig. 1. As is well known in the art, the VFD typically contains power electronics that require cooling in order for the drive to operate under optimum conditions over the operating range of the system. In practice, the power electronic components requiring cooling are generally insulated gate bipolar transistors (IGBT) that are depicted schematically at 27 in the drawings. As noted above, the power electronic components have heretofore been cooled by placing them in heat transfer relation with a heat sink and circulating cooling water. This type of cooling system is rather complex, requires a good deal of space, and is difficult to control.

As illustrated in Fig. 1, the power electronic components of the VFD are mounted directly upon a heat sink 30 that forms part of what is herein referred to as the VFD evaporator 29. The heat sink is fabricated from a block of material that has a high coefficient of thermal conductivity such that the heat energy generated by the power electronic components is rapidly drawn away from and absorbed into the heat sink. An internal flow channel 32 is mounted within the block of material. The channel follows a tortuous path of travel through the block of material to provide for a maximum amount of contact area between the channel and the heat sink. In practice, the flow channel can be a length of copper tubing or the like that is embedded in the heat sink and which has an inlet at 33 and an outlet at 34.

The inlet 33 to the internal flow channel is connected to the refrigerant outlet 35 of the system condenser by a supply line 36. The outlet of the flow channel, in turn, is connected to the compressor inlet by a discharge line 39. A control valve, generally referenced 40, is contained in the supply line through which refrigerant is throttled from the higher condenser pressure down to a lower pressure thereby providing low temperature refrigerant to the heat sink for cooling the power electronic components.

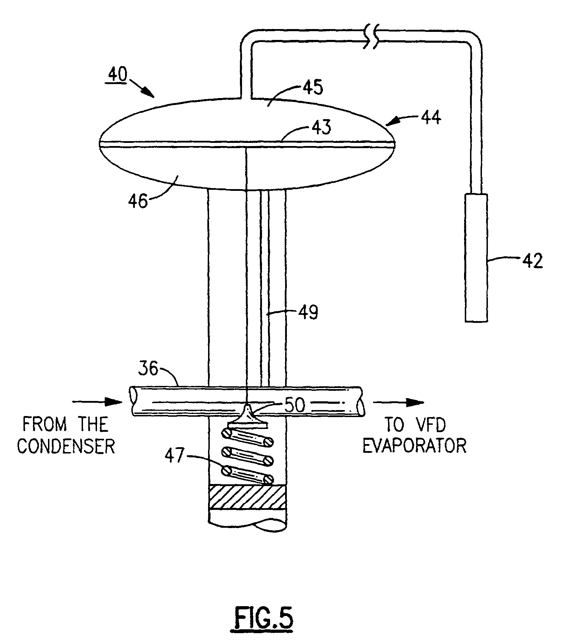

The control valve 40 is shown in greater detail in Fig. 5. The valve includes a sensor probe 42 that is embedded in the heat sink as close as practicable to the power electronic components that will best reference the operating temperature. The valve may be a temperature control valve which responds to the temperature sensed by the probe or a temperature expansion valve which responds to pressure changes at the probe produced by temperature changes in the heat sink. In this embodiment, the valve is a temperature expansion valve that includes a diaphragm 43 mounted inside a housing 44. Based upon the temperature of the heat sink, the bulb pressure changes which, in turn, sets a pressure on the high side chamber 45 of the diaphragm. The pressure on the low side chamber of the diaphragm 46 is determined by a preset adjustable spring 47 and an equalizing port 49 that extends between the low pressure side of the chamber and the low pressure side of the valve body 50. The pressure balance across the diaphragm of the valve locates the valve body within the valve passage and thus controls the amount of cooling provided to the heat sink. Preferably, the heat sink temperature is held within a range of between 90° and 140°.

As can be seen from the disclosure above, the heat sink with the flow channel passing therethrough acts as a refrigerant evaporator with regard to the VFD to provide closely controlled cooling to the power electronic components by utilizing the refrigeration cycle to remove heat from the VFD. As can be seen, the heat transferred to the refrigerant in the VFD evaporator is moved by the system compressor to the system condenser where it is rejected into the condenser cooling loop.

Fig. 2 depicts a further embodiment of the invention wherein like components described with reference to Fig. 1 are identified with the same reference numbers. In this embodiment of the invention the discharge line 39 of the VFD evaporator is connected into the system evaporator 17 and combined with refrigerant being processed through the evaporator. The valve sensor 42 is shown mounted upon the discharge line of the VFD evaporator rather than embedded in the heat sink. The sensor feeds back temperature information to the control valve 40 which, in turn, sets the positioning of the valve body in response to the sensed refrigerant temperature to hold the sink temperature within the desired operating range needed to cool the power electronic components.

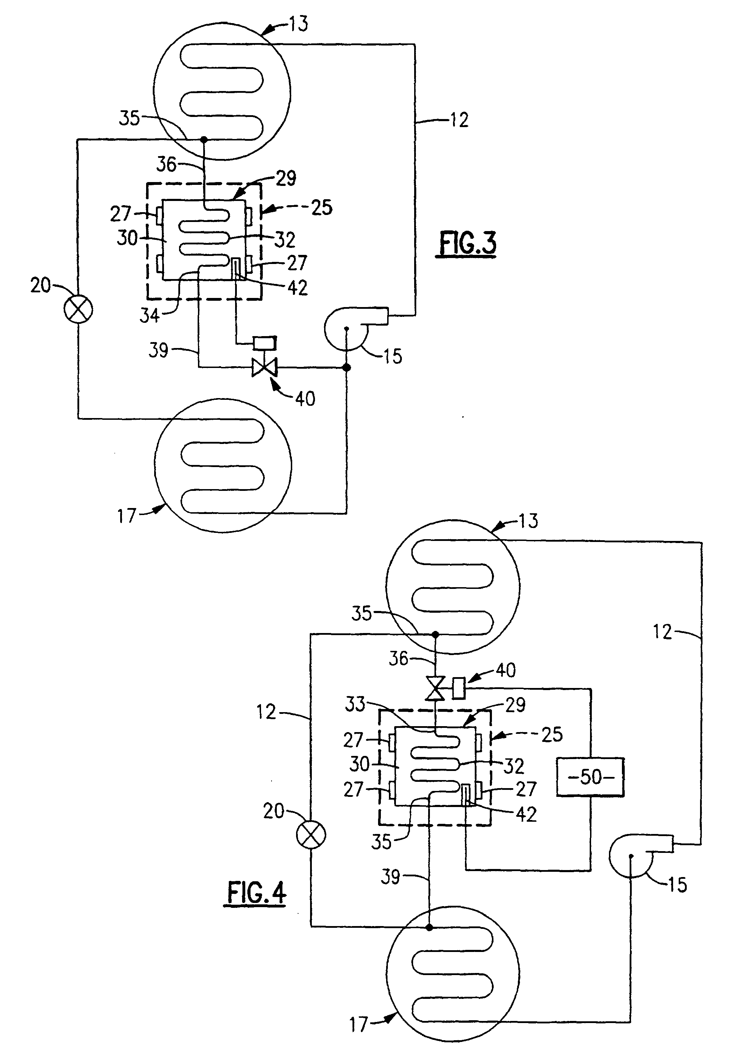

Turning now to Fig. 3, there is shown a still further embodiment of the invention where again like numbers are used to identify like previously identified components. In this further embodiment of the invention the control valve 40 is mounted in the discharge line of the VFD evaporator 29 which, in this case, is connected directly to the compressor inlet. However, as noted above, the discharge line may alternatively be connected directly to the system. The temperature sensor 42 is embedded in the heat sink 30 of the VFD evaporator and provides temperature related information to the control valve. Typically, the temperature of the refrigerant leaving the system condenser is below 140°F so that the refrigerant shunted to the VFD evaporator is well within the desired heat sink temperature range required for cooling the power electronic components.

Fig. 4 illustrates a still further embodiment of the invention wherein like numbers are again used to identify previously above-identified components. In this embodiment of the invention, part of the refrigerant leaving the system condenser is expanded into the VFD evaporator 29 through a temperature control valve 40. A temperature sensor 42 is again embedded in the heat sink 30 and provides temperature related information to a microprocessor 50 that is programmed to process the data and send a control signal to the valve. Other system related information can also be sent to the microprocessor which can be additionally processed to arrive at a desired valve setting to provide cooling to the power electronics at a minimum of expense to the system's overall performance.

As evidenced from the disclosure above, the present invention is a simple yet effective solution to cooling the power electric components of a variable frequency drive for a refrigerant compressor. The present system eliminates the complexities of the more traditional water cooling systems, is easier to install, and provides for greater control over the cooling process. The present system, because of its efficiency, also allows for greater use of the power electronics having a greater capacity than those presently found in the prior art used in the compressor drive of a refrigeration system.

According to a more particular feature, the present invention improves the cooling of the power electronics of a variable frequency drive used to control a refrigerant compressor. A still further feature of the present invention is to reduce the amount of space required by cooling equipment for the variable frequency drive of the refrigeration system compressor. Another feature of the present invention is to more reliably control the cooling of the power electronic components of the variable frequency drive of the refrigeration system compressor. Still another feature of the present invention is the provision of refrigerant cooling to the power electronics of the variable frequency drive of the refrigeration system compressor.

## Claims

1. Cooling apparatus for the power electronics of a variable frequency drive (25) used to control the motor of a compressor in a refrigeration system that includes
a refrigeration system (10) that further includes a compressor (15), a condenser (13), and an evaporator (17) connected in series by refrigerant lines (12) and an expansion means (20) in one of said lines for throttling refrigerant moving between the condenser (13) and the evaporator (17),
a variable frequency drive means (25) connected to the compressor motor, said drive means containing power electronic components (27) that require cooling,
a circuit for shunting a portion of the refrigerant from the system condenser to the compressor inlet,
a variable frequency drive evaporator (29) mounted in said circuit that is in heat transfer relation with the power electronics components (27) of the variable frequency drive (25);
a control valve (40) in said circuit for expanding the refrigerant moving through said circuit from the system condenser pressure to the compressor inlet pressure whereby said power electronic components are cooled

2. The apparatus of claim 1 wherein said variable frequency drive evaporator (29) includes a heat sink (30) formed of a block of material having a high coefficient of thermal conductivity through which said flow channel (32) passes and wherein said power electronic components (27) are mounted in heat transfer relation with said heat sink (30).

3. The apparatus of claim 1 that further includes a temperature probe (42) for providing heat sink related temperature information to the said valve (40) whereby the valve is opened and closed in response to the sensed temperature.

4. The apparatus of claim 3 wherein said temperature probe (42) is embedded in said heat sink (30).

5. The apparatus of claim 3 wherein said probe (42) is mounted in said flow circuit downstream from the heat sink (30).

6. The apparatus of claim 2 wherein said control valve (40) is a temperature expansion valve and further includes a temperature probe (42) for providing pressure information to the valve (40) based upon the temperature of the heat sink (30).

7. The apparatus of claim 6 wherein said probe (42) is embedded in said heat sink (30).

8. The apparatus of claim 2, 6 or 7 wherein said control valve (40) is located upon the upstream side of said heat sink.

9. The apparatus of claim 2, 6 or 7 wherein said control valve is located on the downstream side of the heat sink.

10. The apparatus of claim 3, 4 or 5 that further includes a microprocessor (50) that is arranged to accept input data from the probe (42) and provides an output control signal to said valve (40) for holding the heat sink temperature within a desired temperature range.

11. A method of cooling the power electronic components (27) of a variable frequency drive (VFD) (25) used to control the motor of compressor in a refrigeration system that is **characterized by** the steps of:
mounting the power electronic components (27) of the VFD (25) in heat transfer relation with a heat sink (30).
bringing refrigerant drawn from the refrigeration condenser (13) in heat transfer relation with heat sink (30).
expanding the refrigerant drawn from the condenser pressure down to a lower pressure to maintain the heat sink temperature within a desired range.

12. The method of claim 11 that includes the further step of discharging refrigerant leaving said heat sink (30) into the system compressor inlet.

13. The method of claim 11 that includes the further step of discharging refrigerant leaving said heat sink (30) into the system evaporator.

14. The method of claim 11, 12 or 13 that further includes the step of expanding said refrigerant through a control valve (40) prior to bringing said refrigerant into heat transfer relation with said heat sink (30).

15. The method of claim 14 that includes the further step of sensing the temperature of said heat sink (30) and positioning said control valve (40) in response to said sensed temperature.

16. The method of claim 14 that includes the further step of sensing the temperature of said heat sink (30), providing the sensed temperature data to a microprocessor (50) for processing and providing an output signal from said processor (50) to said control valve (40) for maintaining the temperature of said heat sink (30) within a desired range.

## Patentansprüche

1. Kühlvorrichtung für die Leistungselektronik einer frequenzvariablen Ansteuerung (25), die verwendet wird, den Motor eines Verdichters in einem Kühlsystem zu steuern, aufweisend:
ein Kühlsystem (10), das ferner einen Verdichter (15), einen Kondensator (13) und einen Verdampfer (M) aufweist, die durch Kühlmittelleitungen (12) und eine Expansionseinrichtung (20) in einer der Leitungen zum Drosseln eines Kühlmittels, das sich zwischen dem Kondensator (13) und dem Verdampfer (17) bewegt, in Serie verbunden sind;
eine frequenzvariable Ansteuerungseinrichtung (25), die an den Verdichtermotor angeschlossen ist, wobei die Ansteuerungseinrichtung elektronische Leistungsbauteile (27) enthält, die ein Kühlen erfordern;
eine Verbindung zum Kurzschließen eines Teils des Kühlmittels von dem Systemkondensator an den Verdichtereinlass;
einen Verdampfer (29) für die frequenzvariable Ansteuerung, der in der Verbindung angeordnet ist und der in Wärmeübertragungsbeziehung mit den elektronischen Leistungsbauteilen (27) der frequenzvariablen Ansteuerung (25) steht; und
ein Steuerventil (40) in der Verbindung zum Expandieren des Kühlmittels, das sich durch die Verbindung von dem Systemkondensatordruck zu dem Verdichtereinlassdruck bewegt, wodurch die elektronischen Leistungsbauteile gekühlt werden.

2. Vorrichtung nach Anspruch 1, wobei der Verdampfer (29) für die frequenzvariable Ansteuerung eine Wärmesenke (30) aufweist, die aus einem Materialblock mit einem hohen Wärmeleitfähigkeitskoeffizienten gebildet ist, durch den der Strömungskanal (32) verläuft, und wobei die elektronischen Leistungsbauteile (27) in Wärmeübertragungsbeziehung mit der Wärmesenke (30) angeordnet sind.

3. Vorrichtung nach Anspruch 1, die ferner einen Temperaturfühler (42) zum Bereitstellen einer mit der Wärmesenke in Beziehung stehenden Temperaturinformation an das Ventil (40) aufweist, wodurch das Ventil in Reaktion auf die erfasste Temperatur geöffnet und geschlossen wird.

4. Vorrichtung nach Anspruch 3, wobei der Temperaturfühler (42) in die Wärmesenke (30) eingebettet ist.

5. Vorrichtung nach Anspruch 3, wobei der Fühler (42) in der Strömungsverbindung strömungsabwärts der Wärmesenke (30) angebracht ist.

6. Vorrichtung nach Anspruch 2, wobei das Steuerventil (40) ein Temperaturexpansionsventil ist und ferner einen Temperaturfühler (42) zum Bereitstellen einer Druckinformation an das Ventil (40), basierend auf der Temperatur der Wärmesenke (30), aufweist.

7. Vorrichtung nach Anspruch 6, wobei der Fühler (42) in die Wärmesenke (30) eingebettet ist.

8. Vorrichtung nach Anspruch 2, 6 oder 7, wobei das Steuerventil (40) an der strömungsaufwärtigen Seite der Wärmesenke angeordnet ist.

9. Vorrichtung nach Anspruch 2, 6 oder 7, wobei das Steuerventil an der strömungsabwärtigen Seite der Wärmesenke angeordnet ist.

10. Vorrichtung nach Anspruch 3, 4 oder 5, das ferner einen Mikroprozessor (50) aufweist, der dazu ausgelegt ist, Eingangsdaten von dem Fühler (42) anzunehmen, und der ein Steuerungsausgangssignal an das Ventil (40) zum Halten der Wärmesenkentemperatur innerhalb eines gewünschten Temperaturbereichs bereitstellt.

11. Verfahren zum Kühlen der elektronischer Leistungsbauteile (27) einer frequenzvariablen Ansteuerung (VFD) (25), die verwendet wird, den Motor eines Verdichters in einem Kühlsystem zu steuern, **gekennzeichnet durch** die folgenden Schritte:
Anordnen der elektronischen Leistungsbauteile (27) der VFD (25) in Wärmeübertragungsbeziehung mit einer Wärmesenke (30);
Bringen eines von dem Kühlkondensator (13) abgezogenen Kühlmittels in Wärmeübertragungsbeziehung mit der Wärmesenke (30); und
Expandieren des abgezogenen Kühlmittels von dem Kondensatordruck hinunter auf einen niedrigeren Druck, um die Wärmesenkentremperatur in einem gewünschten Bereich zu halten.

12. Verfahren nach Anspruch 11, das den weiteren Schritt des Abgebens von Kühlmittel, das die Wärmesenke (30) verlässt, in den Systemverdichtereinlass umfasst.

13. Verfahren nach Anspruch 11, das den weiteren Schritt des Abgebens von Kühlmittel, das aus der Wärmesenke (30) austritt, in den Systemverdampfer umfasst.

14. Verfahren nach Anspruch 11, 12 oder 13, das ferner den Schritt des Expandierens des Kühlmittels durch ein Steuerventil (40) vor dem Bringen des Kühlmittels in Wärmeübertragungsbeziehung mit der Wärmesenke (30) umfasst.

15. Verfahren nach Anspruch 14, das den weiteren Schritt des Erfassens der Temperatur der Wärmesenke (30) und des Positionierens des Steuerventils (40) in Reaktion auf die erfasste Temperatur umfasst.

16. Verfahren nach Anspruch 14, das die weiteren Schritte des Erfassens der Temperatur der Wärmesenke (30), des Bereitstellens der erfassten Temperaturdaten an einen Mikroprozessor (50) zum Verarbeiten und des Bereitstellens eines Ausgangssignals von dem Prozessor (50) an das Steuerventil (40) zum Halten der Temperatur der Wärmesenke (30) in einem gewünschten Bereich umfasst.

## Revendications

1. Dispositif de refroidissement pour l'électronique de puissance d'un entraînement à fréquence variable (25) utilisé pour commander le moteur d'un compresseur dans un système de réfrigération qui comprend :
un système de réfrigération (10) qui comprend en outre un compresseur (15), un condenseur (13) et un évaporateur (17) raccordés en série par des conduites de fluide réfrigérant (12) et des moyens de dilatation (20) dans l'une desdites lignes pour étrangler le fluide réfrigérant se déplaçant entre le condenseur (13) et l'évaporateur (17),
des moyens formant entraînement à fréquence variable (25) raccordés au moteur de compresseur, lesdits moyens formant entraînement contenant des composants électroniques de puissance (27) qui nécessitent le refroidissement,
un circuit pour dériver une partie du fluide réfrigérant depuis le condenseur du système vers l'entrée du compresseur,
un évaporateur d'entraînement à fréquence variable (29) fixé sur ledit circuit qui est relation de transfert thermique avec les composants électroniques de puissance (27) de l'entraînement à fréquence variable (25),
une soupape de commande (40) dans ledit circuit pour dilater le fluide réfrigérant se déplaçant à travers ledit circuit depuis la pression de condenseur du système jusqu'à la pression d'entrée du compresseur, moyennant quoi lesdits composants électroniques de puissance sont refroidis.

2. Dispositif selon la revendication 1, dans lequel ledit évaporateur d'entraînement à fréquence variable (29) comprend une source de froid thermodynamique (30) formée d'un bloc de matériau présentant un coefficient élevé de conductivité thermique à travers lequel ledit canal d'écoulement (32) passe et dans lequel lesdits composants électroniques de puissance (27) sont fixés en relation de transfert thermique avec ladite source de froid thermodynamique (30).

3. Dispositif selon la revendication 1, qui comprend en outre une sonde de température (42) pour fournir des informations de température liées à la source de froid thermodynamique à ladite soupape (40), moyennant quoi la soupape est ouverte et fermée en réponse à la température captée.

4. Dispositif selon la revendication 3, dans lequel ladite sonde de température (42) est intégrée dans ladite source de froid thermodynamique (30).

5. Dispositif selon la revendication 3, dans lequel ladite sonde (42) est fixée dans ledit circuit d'écoulement en aval de ladite source de froid thermodynamique (30).

6. Dispositif selon la revendication 2, dans lequel ladite soupape de commande (40) est une soupape de détente par température et comprend en outre une sonde de température (42) pour fournir des informations de pression à la soupape (40) en fonction de la température de la source de froid thermodynamique (30).

7. Dispositif selon la revendication 6, dans lequel ladite sonde (42) est intégrée dans ladite source de froid thermodynamique (30).

8. Dispositif selon la revendication 2, 6 ou 7 dans lequel ladite soupape de commande (40) est placée sur le côté en amont de ladite source de froid thermodynamique.

9. Dispositif selon la revendication 2, 6 ou 7, dans lequel ladite soupape de commande est placée sur le côté en aval de la source de froid thermodynamique.

10. Dispositif selon la revendication 3, 4 ou 5 qui comprend en outre un microprocesseur (50) qui est agencé pour accepter des données d'entrée depuis la sonde (42) et fournit un signal de commande de sortie à la soupape (40) pour retenir la température de la source de froid thermodynamique dans une plage de température souhaitée.

11. Procédé de refroidissement des composants électroniques de puissance (27) d'un entraînement à fréquence variable (VFD) (25) utilisé pour commander le moteur de compresseur dans un système de réfrigération qui est **caractérisé par** les étapes consistant à :
fixer les composants électroniques de puissance (27) du VFD (25) en relation de transfert thermique avec une source de froid thermodynamique (30),
apporter un fluide réfrigérant extrait du condensateur de réfrigération (13) en relation de transfert thermique avec la source de froid thermodynamique (30),
dilater le fluide réfrigérant extrait depuis la pression de condenseur à une pression inférieure pour maintenir la température de la source de froid thermodynamique dans une plage souhaitée.

12. Procédé selon la revendication 11 qui comprend en outre l'étape consistant à évacuer le fluide réfrigérant qui quitte ladite source de froid thermodynamique (30) dans l'entrée de compresseur de système.

13. Procédé selon la revendication 11 qui comprend en outre l'étape consistant à évacuer le fluide réfrigérant qui quitte ladite source de froid thermodynamique (30) dans l'évaporateur de système.

14. Procédé selon la revendication 11, 12 ou 13 qui comprend en outre l'étape consistant à dilater ledit fluide réfrigérant à travers une soupape de commande (40) avant d'apporter ledit fluide réfrigérant en relation de transfert thermique avec ladite source de froid thermodynamique (30).

15. Procédé selon la revendication 14 qui comprend en outre l'étape consistant à détecter la température de ladite source de froid thermodynamique (30) et à positionner ladite soupape de commande (40) en réponse à ladite température détectée.

16. Procédé selon la revendication 14 qui comprend en outre l'étape consistant à détecter la température de ladite source de froid thermodynamique (30), à fournir les données de température captées à un microprocesseur (50) pour traiter et fournir un signal de sortie depuis ledit processeur (50) à ladite soupape de commande (40) pour maintenir la température de ladite source de froid thermodynamique (30) dans une plage souhaitée.
